# EUROPEAN PATENT APPLICATION

(11) **EP 4 836 017 A1**
(43) Date of publication of application: **04.11.2026**
(21) Application number: 24910039.7
(22) Date of filing: 19.09.2024
(51) Int. Cl.: H01M 4/587, H01M 4/133, H01M 10/054

(54) **HARD CARBON ANODE MATERIAL, ANODE, SODIUM-ION BATTERY, AND APPARATUS**

(30) Priority: 29.12.2023 CN 202311868252
(71) Applicant: BYD Company Limited, Shenzhen, Guangdong 518118 (CN)
(72) Inventor: WANG, Xuewan, Shenzhen, Guangdong 518118 (CN); PENG, Yudong, Shenzhen, Guangdong 518118 (CN); BAO, Chunxiao, Shenzhen, Guangdong 518118 (CN); CI, Xiangyun, Shenzhen, Guangdong 518118 (CN); HE, Kefeng, Shenzhen, Guangdong 518118 (CN)
(74) Representative: Mathys & Squire
(86) International application number: PCT/CN2024/119686
(87) International publication number: WO 2025/139094

(57) **Abstract**

Disclosed is a hard carbon negative electrode material. A 2θ value corresponding to a diffraction peak of a (002) crystal plane in an XRD pattern of the hard carbon negative electrode material is V_{C}^{o}; an I_{D}/I_{G} value in a Raman spectrum is V_{D/G}; and an oil absorption value V_{DBP} in mL/100 g satisfies: 0.8≤V_{C}/V_{DBP}+V_{D/G}≤12.60. This application further provides a sodium-ion battery, an apparatus, and a negative electrode that uses the hard carbon negative electrode material.

## Description

This application claims priority to Chinese Patent Application No. 202311868252.1, filed with the China National Intellectual Property Administration on December 29, 2023 and entitled "HARD CARBON NEGATIVE ELECTRODE MATERIAL, NEGATIVE ELECTRODE, SODIUM-ION BATTERY, AND APPARATUS", which is incorporated herein by reference in its entirety.

### TECHNICAL FIELD

This application relates to the field of sodium-ion battery technologies, and specifically, to a hard carbon negative electrode material, a negative electrode, a sodium-ion battery, and an apparatus.

### BACKGROUND

Global lithium resources are scarce and remain at high prices, which constrains the development of lithium-ion batteries. The market has begun to seek alternatives to the lithium-ion batteries. Sodium-ion batteries operate on essentially the same energy storage principle as the lithium-ion batteries, and sodium resources are abundant, so that sodium-ion batteries are more likely to meet future requirements for low-cost and large-scale energy storage devices.

Currently, hard carbon materials are widely used as negative electrode active materials in sodium-ion batteries. As overall performance requirements for sodium-ion batteries increase, higher requirements are correspondingly imposed on the hard carbon negative electrode materials. However, the hard carbon negative electrode materials currently used in sodium-ion batteries fail to enable sodium-ion batteries to achieve both high energy density and good fast-charging performance.

### SUMMARY

In view of this, this application provides a hard carbon negative electrode material. Multiple parameters of the hard carbon negative electrode material satisfy a specific relationship. This can ensure that the hard carbon negative electrode material can achieve high capacity and good kinetic performance, thereby enabling sodium-ion batteries made of the hard carbon negative electrode material to achieve both high energy density and fast-charging performance.

Specifically, a first aspect of this application provides a hard carbon negative electrode material. A 2θ angle value corresponding to a diffraction peak of a (002) crystal plane in an XRD pattern of the hard carbon negative electrode material is V_{C}°; an I_{D}/I_{G} value in a Raman spectrum of the hard carbon negative electrode material is V_{D/G}; and an oil absorption value of the hard carbon negative electrode material is V_{DBP} mL/100 g. The hard carbon negative electrode material satisfies: 0.8≤V_{C}/V_{DBP}+V_{D/G}≤12.6.

When the parameters V_{C}, V_{D/G}, and V_{DBP} satisfy the foregoing relationship and the defined range, the hard carbon negative electrode material has better kinetic performance and higher capacity. This helps produce sodium-ion batteries with high energy density and fast-charging performance.

In an embodiment, V_{C} falls in a range of 20 to 26.

In an embodiment, V_{D/G} falls in a range of 0.5 to 10.0.

In an embodiment, V_{DBP} falls in a range of 10 to 100.

In an embodiment, 1.0≤V_{C}/V_{DBP}+V_{D/G}≤10.0.

In an embodiment, 1.28≤V_{C}/V_{DBP}+V_{D/G}≤4.12.

In an embodiment, V_{C} falls in a range of 22 to 25.

In an embodiment, V_{D/G} falls in a range of 1.0 to 3.5.

In an embodiment, V_{DBP} falls in a range of 40 to 80.

In an embodiment, the hard carbon negative electrode material has a D50 of 2 µm to 20 µm.

A second aspect of this application provides a negative electrode. The negative electrode includes the hard carbon negative electrode material according to the first aspect of this application. Because the negative electrode includes the hard carbon negative electrode material, the negative electrode may be used to provide sodium-ion batteries with fast-charging performance and high energy density.

A third aspect of this application provides a sodium-ion battery, including the negative electrode according to the second aspect of this application, and a positive electrode. This sodium-ion battery has good fast-charging performance and high energy density.

A fourth aspect of this application provides an apparatus with the sodium-ion battery according to the third aspect of this application. The apparatus is a power-consuming device or an energy storage system.

### BRIEF DESCRIPTION OF DRAWINGS

FIG. 1 is an XRD pattern of a hard carbon negative electrode material according to Example 3 of this application;
FIG. 2 is a Raman spectrum of a hard carbon negative electrode material according to Example 3 of this application;
FIG. 3 is a diagram of a structure of a negative electrode according to an embodiment of this application;
FIG. 4 is a diagram of a structure of a sodium-ion battery according to an embodiment of this application; and
FIG. 5 is a diagram of a structure of an apparatus including a sodium-ion battery according to an embodiment of this application.

### DESCRIPTION OF EMBODIMENTS

An embodiment of this application provides a hard carbon negative electrode material that allows sodium-ion batteries to achieve both high energy density and fast-charging performance.

Specifically, this embodiment of this application provides the hard carbon negative electrode material. A 2θ angle value corresponding to a diffraction peak of a (002) crystal plane in an XRD pattern of the hard carbon negative electrode material is V_{C}°; an I_{D}/I_{G} value in a Raman spectrum of the hard carbon negative electrode material is V_{D/G}; and an oil absorption value of the hard carbon negative electrode material is V_{DBP} mL/100 g. The hard carbon negative electrode material satisfies: 0.80≤V_{C}/V_{DBP}+V_{D/G}≤12.60.

The parameter V_{C} may reflect a carbonization degree of the hard carbon negative electrode material, and a specific carbonization degree directly affects the sodium-storage capacity of the hard carbon negative electrode material. V_{D/G} is specifically a ratio of a peak area of a characteristic D peak to that of a characteristic G peak in the Raman spectrum of the hard carbon negative electrode material. This ratio may reflect a defect level on a surface of the hard carbon material, determine availability of active sites for insertion and extraction of sodium ions, influence kinetic performance of the hard carbon negative electrode material, and affect a magnitude of overpotential during charging and discharging, thereby affecting the capacity of the hard carbon negative electrode material.

The oil absorption value determines compatibility between the hard carbon negative electrode material and an electrolyte solution. Generally, a higher oil absorption value of the negative electrode material facilitates electrolyte solution wetting of the negative electrode and efficient diffusion of active ions in the negative electrode. In addition, the oil absorption value V_{DBP} is related to the magnitude of the overpotential exhibited by the negative electrode material during charging and discharging, thereby affecting the capacity of the hard carbon negative electrode material.

The inventors of this application found through extensive experimentation that when the parameters V_{C}, V_{D/G}, and V_{DBP} satisfy 0.80≤V_{C}/V_{DBP}+V_{D/G}≤12.60, the hard carbon negative electrode material has high capacity. In addition, this can improve the compatibility between the hard carbon negative electrode material and the electrolyte solution, reduce diffusion resistance and charge-transfer resistance of the active ions, and ensure good kinetic performance. As a result, sodium-ion batteries made with the hard carbon negative electrode material can achieve both high capacity and fast-charging performance. In this application, V_{C}/V_{DBP}+V_{D/G} may be specifically 0.82, 0.85, 0.88, 0.90, 1.00, 1.20, 1.30, 1.50, 2.00, 2.20, 2.50, 2.80, 3.00, 3.50, 3.80, 4.00, 4.10, 4.50, 5.00, 6.00, 7.00, 8.00, 9.00, 10.00, 11.00, 12.00, 12.50, or the like.

In some implementations of this application, 1.0≤V_{C}/V_{DBP}+V_{D/G}≤10.0. In this case, the hard carbon negative electrode material can effectively achieve both high capacity and good kinetic performance. In some embodiments, 1.28≤V_{C}/V_{DBP}+V_{D/G}≤4.12.

In an implementation of this application, V_{C} falls in a range of 20 to 26. That is, the 2θ value corresponding to the diffraction peak of the (002) crystal plane in the XRD pattern of the hard carbon negative electrode material falls in a range of 20° to 26°. When V_{C} falls within this range, it is ensured that the hard carbon negative electrode material has a high sodium-storage capacity, thereby providing a basis for high capacity of the hard carbon negative electrode material. Specifically, V_{C} may be 20.5, 21, 21.5, 22, 22.5, 23, 23.5, 24, 24.5, 25, 25.5, or the like. In some implementations of this application, V_{C} falls in a range of 22 to 25. In this case, the carbonization degree of the hard carbon negative electrode material is more appropriate, resulting in higher sodium-storage capacity and good kinetic performance.

In an implementation of this application, V_{D/G} falls in a range of 0.5 to 10.0. When V_{D/G} falls within this range, it is ensured that the defect level on the surface of the hard carbon negative electrode material is appropriate. An appropriate defect level on the surface facilitates the kinetic performance of the hard carbon negative electrode material, and neither causes capacity degradation due to excessive overpotential during charging and discharging, nor causes a reduction in reversible capacity due to excessive defects. Specifically, V_{D/G} may be 0.60, 0.70, 1.00, 1.50, 2.00, 2.20, 2.30, 2.50, 3.00, 3.20, 3.50, 3.80, 4.00, 5.00, 6.00, 7.00, 8.80, 9.00, 10.00, or the like. In some implementations of this application, V_{D/G} falls in a range of 1.0 to 3.5. In this case, the hard carbon negative electrode material has higher capacity and lower irreversible capacity, thereby improving initial Coulombic efficiency of a battery.

In an implementation of this application, V_{DBP} falls in a range of 10 to 100. That is, the oil absorption value of the hard carbon negative electrode material falls in a range of 10 mL/100 g to 100 mL/100 g. When the oil absorption value of the hard carbon negative electrode material falls within this range, good compatibility between the hard carbon negative electrode material and the electrolyte solution is ensured. This further facilitates electrolyte solution wetting of the negative electrode containing the hard carbon negative electrode material and efficient diffusion of active sodium ions in the negative electrode. Moreover, the oil absorption value within this range also contributes to higher initial Coulombic efficiency of the hard carbon negative electrode material. Specifically, V_{DBP} may be 10, 20, 30, 40, 50, 60, 70, 80, 90, or the like. In some implementations of this application, the oil absorption value V_{DBP} falls in a range of 40 to 80. This helps the hard carbon negative electrode material implement good kinetic performance and high capacity.

In this application, when the parameters of the hard carbon negative electrode material in the negative electrode need to be tested, the hard carbon negative electrode material may first be separated from the negative electrode. The separated negative electrode is immersed in an aqueous solution for two days and ultrasonically treated until coating on a negative electrode current collector is completely detached. Then, a resulting coating solution is subjected to differential centrifugation and washed with water to obtain a crude hard carbon material. Further, the obtained crude hard carbon material is placed in an HCl solution of a specific concentration, and stirred or ultrasonically treated to help accelerate dissolution, thereby removing a readily soluble component of an SEI film adhered to the hard carbon material. Subsequently, solid-liquid separation is performed through centrifugation or filtration, and an obtained hard carbon material is dried at 80°C to 100°C to obtain hard carbon negative electrode material powder that is suitable for physicochemical characterization testing.

In this application, a method for obtaining the parameter V_{C} of the hard carbon negative electrode material is as follows: XRD measurement is performed on the hard carbon negative electrode material, to obtain the XRD pattern. During testing, a Cu target is used as a cathode ray source and a scan rate is 10°/min. Single-crystal silicon powder (purity≥99.99%) is used as an internal standard substance. The Single-crystal silicon powder is ground in an agate mortar and passed completely through a 45-µm standard sieve, and a (111) peak of the Single-crystal silicon powder is at 28.42° according to a PDF card. Then, the 2θ angle value corresponding to the diffraction peak of the (002) crystal plane is found from the obtained XRD pattern, that is, a V_{C} value is obtained.

A method for obtaining the parameter V_{D/G} of the hard carbon negative electrode material is as follows: Raman (Raman) spectroscopy measurement is performed on the hard carbon negative electrode material. Specifically, a Renishaw Invia device may be used for testing, with an excitation wavelength of 532 nm and a wavenumber range of 100 cm⁻¹ to 4000 cm⁻¹. Then, a peak area I_{D} of a characteristic D peak and a peak area I_{G} of a characteristic G peak are obtained through integration from a measured Raman spectrum. A ratio of I_{D} to I_{G} is calculated to obtain V_{D/G}.

A method for obtaining the oil absorption value V_{DBP} is as follows: 70 mL of a hard carbon negative electrode material sample is measured using a graduated cylinder, and a mass m is recorded. The hard carbon negative electrode material sample having the mass m is placed into a mixing chamber of an S500 oil-absorption tester, and a torque threshold of the oil-absorption tester is set to 1.5 Nm. Then, test oil (specifically linseed oil) is added to the hard carbon negative electrode material sample in the mixing chamber at a constant rate of 5 mL/min. As oil uptake of the sample increases, viscosity of a mixture of the sample and the oil continuously increases. The oil-absorption tester displays an oil volume V₁ corresponding to maximum torque of the testing sample reached during testing. 70% of V₁ is taken as an actual volume of oil absorbed by the sample. A volume of oil absorbed per unit mass of the sample may be calculated by dividing 70% of V₁ by m, that is, the oil absorption value V_{DBP} of the hard carbon negative electrode material sample may be obtained.

In an implementation of this application, the hard carbon negative electrode material has a D50 of 2 µm to 20 µm. An appropriate particle size D50 may ensure that the hard carbon negative electrode material has an appropriate specific surface area. This facilitates insertion and extraction of active ions, thereby providing appropriate electrochemical kinetic performance and helping the negative electrode maintain high compaction density. D50 herein means a particle size corresponding to a cumulative volume percentage of 50% of a hard carbon negative electrode material particle. The D50 may be obtained by performing laser particle size analysis on the hard carbon negative electrode material. As for a specific test method, refer to a laser diffraction method for particle size analysis specified in GB/T 19077-2016/ISO 13320:2009.

In this implementation of this application, the hard carbon negative electrode material may be obtained by carbonizing a carbon precursor material. The carbon precursor material may include, but is not limited to, one or more of resin, anthracite, pitch, and biomass. The biomass may include at least one of the following: coconut shell, rice husk, starch, sucrose, bamboo, polysaccharides, and straw.

For example, a method for preparing the hard carbon negative electrode material may include the following steps: (1) heating the carbon precursor material in an air-isolated atmosphere to a temperature in a range of 200°C to 500°C to perform pre-carbonization treatment, to obtain a pre-carbonized material; (2) crushing the pre-carbonized material and then performing acid-washing treatment; and (3) after drying the acid-washed material, heating the material under a nitrogen atmosphere at a heating rate of 50 °C/min to a temperature in a range of 1000°C to 1400°C, and holding the material at this temperature for 10 h, followed by cooling, sieving, and demagnetizing, to obtain the hard carbon negative electrode material. Acid-washing may be performed at a temperature of 80°C to 100°C, and hydrochloric acid is used as a main acid-washing reagent (weight percentage concentration may range from 20% to 32%). Drying may be performed at a temperature in a range of 80°C to 100°C.

The carbonization degree parameter V_{C} and the parameter V_{D/G} of the hard carbon negative electrode material may be controlled by controlling a type of a carbon precursor material and a process condition such as a carbonization process. The parameter V_{D/G} of the hard carbon negative electrode material may be controlled by controlling the type of the carbon precursor material, and the process condition such as a pre-carbonization temperature, a carbonization temperature, and holding time; and may be controlled by further performing surface modification and/or surface coating on the obtained hard carbon negative electrode material. The oil absorption value V_{DBP} of the hard carbon negative electrode material may be controlled by controlling a particle size and a specific surface area of the hard carbon negative electrode material, whether the material is coated on the hard carbon negative electrode material, or the like.

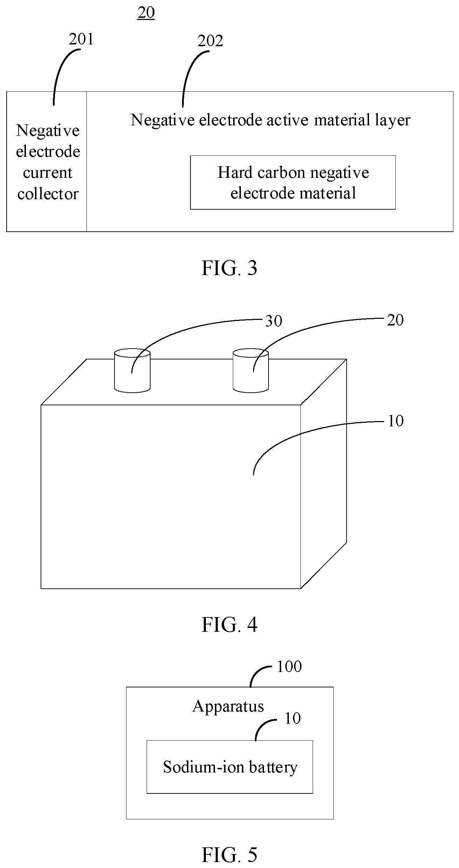

As shown in FIG. 3, an embodiment of this application further provides a negative electrode 20. The negative electrode 20 includes the hard carbon negative electrode material in an embodiment of this application. Generally, the negative electrode includes a negative electrode current collector 201 and a negative electrode active material layer 202 disposed on at least one side surface of the negative electrode current collector. The negative electrode active material layer includes the hard carbon negative electrode material, binder, and an optional conductive agent. Because the negative electrode uses the hard carbon negative electrode material provided in this application as a negative electrode active material, the negative electrode may be used to provide sodium-ion batteries with fast-charging performance and high energy density.

The binder and the conductive agent are materials that are well known to a person skilled in the art. For example, the binder may include one or more of the following: polyvinylidene fluoride (PVDF), polytetrafluoroethylene (PTFE), polyvinyl alcohol (PVA), polyacrylonitrile (PAN), polyimide (PI), polyacrylic acid (PAA), polyacrylonitrile (PAN), polyacrylates (such as polymethyl methacrylate, polyethyl acrylate, and polybutyl acrylate), polyolefins (such as polypropylene and polyethylene), styrene-butadiene rubber (SBR), carboxymethyl cellulose (CMC), sodium carboxymethyl cellulose (CMC-Na), sodium alginate, and the like, but is not limited thereto. The conductive agent may be selected from one or more of the following: conductive carbon black (such as acetylene black, Ketjen black, Supper P, and 350G carbon black), furnace black, carbon fiber, carbon nanotube, graphene, and the like, but is not limited thereto. In addition, the negative electrode current collector may include, but is not limited to, copper foil, aluminum foil, copper-alloy foil, aluminum-alloy foil, carbon-coated copper foil, carbon-coated aluminum foil, copper-plated film, aluminum-plated film, or the like.

As shown in FIG. 4, an embodiment of this application further provides a sodium-ion battery 10. The sodium-ion battery 10 includes the negative electrode 20 in an embodiment of this application. This sodium-ion battery 10 has good fast-charging performance, high energy density, and high safety performance.

In this application, the sodium-ion battery 10 may be a liquid battery using a liquid electrolyte solution, a semi-solid battery using a semi-solid electrolyte, or a solid-state battery using a solid-state electrolyte.

In some implementations, the liquid battery may include a positive electrode, a negative electrode, and a separator and an electrolyte solution that are disposed between the positive electrode and the negative electrode.

In some other implementations, the semi-solid battery may include a positive electrode, a negative electrode, and the semi-solid electrolyte disposed between the positive electrode and the negative electrode. In still other implementations, the solid-state battery may include a positive electrode, a negative electrode, and the solid-state electrolyte disposed between the positive electrode and the negative electrode.

Similar to the structure of the negative electrode, the positive electrode 30 generally includes a positive electrode current collector and a positive electrode active material layer disposed on the positive electrode current collector. The positive electrode active material layer includes a positive electrode active material, binder, and an optional conductive agent. A positive electrode active material suitable for the sodium-ion battery may include, but is not limited to, one or more of the following: layered sodium transition-metal oxide, Prussian blue material, Prussian white material, and polyanionic material (such as Na₃V(PO₃)₃N, Na₃V₂(PO₄)₃, and NaFePO₄).

As shown in FIG. 5, an embodiment of this application further provides an apparatus 100. The apparatus 100 includes the sodium-ion battery 10 in an embodiment of this application. The apparatus may be a power-consuming device such as a transportation tool (for example, an automobile, a motorcycle, or a bicycle), an electric toy, or a 3C electronic product (for example, a mobile phone, a notebook computer, a tablet computer, a pen-input computer, an e-book reader, or a wearable device), or may be an energy storage system. The power-consuming device powered by the lithium battery has longer operating time and a faster charging speed.

The following further describes the technical solutions of embodiments of this application by using multiple embodiments.

### Example 1

Preparation of a hard carbon negative electrode material:
(1) heating a carbon precursor material in an air-isolated atmosphere to a temperature in a range of 200°C to 500°C to perform pre-carbonization treatment, to obtain a pre-carbonized material; (2) crushing the pre-carbonized material and then performing acid-washing treatment at 80°C to 100°C by using hydrochloric acid as a main acid-washing reagent (weight percentage concentration may range from 20% to 32%); and (3) after drying the acid-washed material at 80°C to 100°C, heating the material under a nitrogen atmosphere at a heating rate of 50 °C/min to a temperature in a range of 1000°C to 1400°C for carbonization, and holding the material at this temperature for 10 h, followed by cooling, sieving, and demagnetizing, to obtain the hard carbon negative electrode material.

A hard carbon negative electrode material satisfying requirements shown in Table 1 may be obtained by controlling a type of the carbon precursor material, and a process condition such as a pre-carbonization temperature, a carbonization temperature, and holding time. The hard carbon negative electrode material may be used to prepare a negative electrode and a sodium-ion battery.

Preparation of the negative electrode for the sodium-ion battery includes: mixing the hard carbon negative electrode material in Example 1 shown in Table 1 with a conductive agent (specifically, conductive carbon black Super P), binder CMC, and binder SBR at a mass ratio of 93:2:2:3; stirring mixed powder with deionized water to form negative electrode slurry; uniformly coating the negative electrode slurry on an aluminum-foil current collector; and drying the negative electrode slurry to form a negative electrode active material layer with areal density of 80 m²/g.

Preparation of a sodium-ion full battery includes:
(1) Preparation of a positive electrode sheet: mixing a positive electrode active material sodium nickel iron manganese oxide (a chemical formula is NaNi_{0.33}Fe_{0.33}Mn_{0.34}O₂), with a conductive agent carbon nanotube and binder PVDF in a mass ratio of 97:1:2; stirring mixed powder with solvent N-methylpyrrolidone (NMP) in a homogenizer to obtain positive electrode slurry; uniformly coating the positive electrode slurry on aluminum foil; and drying the positive electrode slurry to form a positive electrode active material layer.
(2) Preparation of an electrolyte solution: mixing ethylene carbonate (EC) and diethyl carbonate (DEC) at a volume ratio of 1:1 to obtain mixed solvent; adding fluoroethylene carbonate (FEC) in an amount of 1 wt% based on a volume of the mixed solvent; and adding an appropriate amount of sodium hexafluorophosphate (NaPF₆) as sodium salt, to prepare a desired electrolyte solution. Concentration of NaPF₆ in the electrolyte solution is 1.0 mol/L.
(3) Assembly of the sodium-ion full battery: stacking the positive electrode sheet, a polypropylene separator, and a negative electrode in sequence, placing the stack into an external package, namely, an aluminum-laminated film, injecting the electrolyte solution; and performing processes such as vacuum packaging, resting, formation, and capacity grading, to prepare a stacked pouch full battery with a rated capacity of 1.2 Ah.

Preparation of a sodium-ion coin-type half battery includes: cutting the negative electrode sheet into a circular disk with a diameter of 13 µm, to obtain a disk containing hard carbon, stacking a sodium metal disk with a diameter of 18 mm and a thickness of 0.50 mm, a glass-fiber battery filter-paper separator, and the disk containing hard carbon in sequence and placed into a coin-type stainless steel shell, injecting the electrolyte solution in (2), and performing packaging, to obtain the coin-type half battery. The sodium metal disk serves as a "negative electrode" of the coin-type half battery, and the electrode sheet containing hard carbon serves as a "positive electrode" of the coin-type half battery.

A charge/discharge testing method for the coin-type half battery includes: in a testing chamber with a constant temperature of 25°C, resting the assembled coin-type half battery for 12 h, and then performing charge/discharge testing. A testing procedure includes: first discharging at a constant current of 0.05 mA to 0.0 V, then discharging at a constant voltage discharge of 0.0 V until a current decreases to 10 µA, and ending discharging, thereby completing a sodiation procedure of the hard carbon; after resting for 30 min, performing charging testing (namely, desodiation), and charging at a constant current of 0.10 mA to 2.5 V; and recording a first sodiation capacity and a first desodiation capacity in units of mAh. Initial Coulombic efficiency of the coin-type half battery=First desodiation capacity/First sodiation capacity×100%. A specific capacity of a hard carbon negative electrode material is equal to a ratio of the first desodiation capacity to a mass of a hard carbon material in an electrode sheet, expressed in mAh/g.

Electrochemical performance testing of the full battery:
First, capacity normalization is performed on each full battery, specifically including: in the testing chamber with a constant temperature of 25°C, charging a sodium-ion full battery at a constant current of 0.20C to 4.0 V, then charging at a constant voltage until a current decreases to 0.05C, recording a charge capacity as C₁; and then discharging at a constant current of 0.20C to 2.0 V, and recording a discharge capacity as C₂.

A charging rate performance testing method is: in the testing chamber with a constant temperature of 25°C, charging a sodium-ion full battery having a discharge capacity of C₂ at a constant current of 2C to 4.0 V, recording a charge capacity as C₃, and calculating charging rate performance at 2.00C as: C₃/C₁×100%.

A discharging rate performance testing method is: in the testing chamber with a constant temperature of 25°C, discharging a fully charged sodium-ion full battery with a capacity of C₁ in the capacity normalization step at a constant current of 2.00C to 2.0 V, recording a discharge capacity as C₄, and calculating discharging rate performance at 2C as: C₄/C₂×100%.

Examples 2 to 15 and Comparative Examples 1 and 2

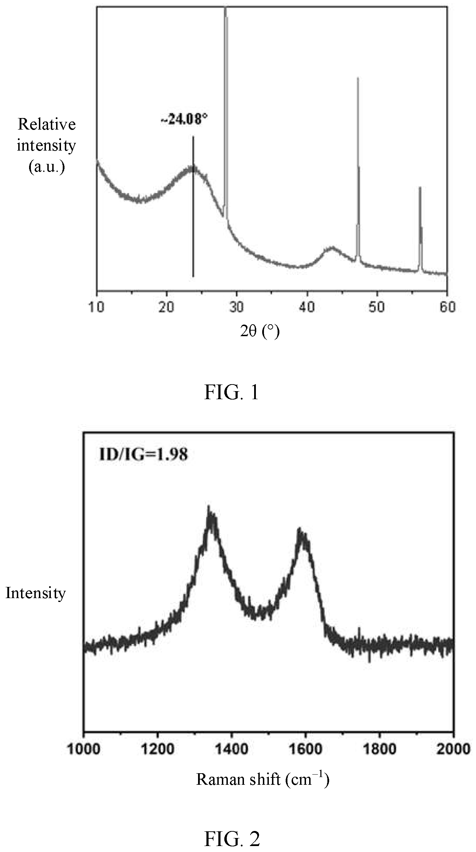

Based on Table 1, hard carbon negative electrode materials required for Examples 2 to 15 and Comparative Examples 1 and 2 are provided. According to the method described in Example 1, these materials are separately prepared into sodium-ion coin-type batteries and full batteries. Corresponding electrochemical performance testing is performed, and results are summarized in Table 2. FIG. 1 and FIG. 2 respectively provide an XRD pattern and a Raman spectrum of a hard carbon negative electrode material in Example 3 of this application.

**Table 1**

| No. | Carbonization degree V_{C} | I_{D}/I_{G} value V_{D/G} | Oil absorption value V_{DBP} | V_{C}/V_{DBP}+V_{D/G} |
|---|---|---|---|---|
| Example 1 | 21.05 | 0.65 | 85.00 | 0.90 |
| Example 2 | 23.39 | 1.08 | 56.10 | 1.50 |
| Example 3 | 24.08 | 1.98 | 75.00 | 2.30 |
| Example 4 | 23.78 | 2.29 | 95.00 | 2.54 |
| Example 5 | 21.30 | 2.33 | 52.00 | 2.74 |
| Example 6 | 26.00 | 2.55 | 62.00 | 2.97 |
| Example 7 | 22.60 | 3.42 | 65.20 | 3.77 |
| Example 8 | 22.18 | 3.78 | 82.00 | 4.05 |
| Example 9 | 24.55 | 5.03 | 50.00 | 5.52 |
| Example 10 | 20.32 | 7.36 | 15.00 | 8.71 |
| Example 11 | 25.62 | 8.98 | 28.00 | 9.90 |
| Example 12 | 20.20 | 10.00 | 11.00 | 11.84 |
| Example 13 | 23.25 | 7.65 | 120.00 | 7.84 |
| Example 14 | 24.27 | 0.40 | 40.00 | 1.01 |
| Example 15 | 19.89 | 10.7 | 13.00 | 12.23 |
| Comparative Example 1 | 19.57 | 11.80 | 9.60 | 13.84 |
| Comparative Example 2 | 26.50 | 0.12 | 57.00 | 0.59 |

**Table 2**

| No. | Specific capacity of hard carbon (mAh/g) | Initial Coulombic efficiency of a coin-type cell (%) | 2C charging rate performance of a full battery (%) | 2C discharging rate performance of the full battery (%) |
|---|---|---|---|---|
| Example 1 | 268.0 | 82.7 | 90.6 | 92.4 |
| Example 2 | 327.6 | 88.6 | 91.2 | 93.7 |
| Example 3 | 318.5 | 88.0 | 92.7 | 95.6 |
| Example 4 | 315.4 | 83.7 | 93.4 | 96.5 |
| Example 5 | 281.4 | 87.1 | 92.1 | 94.9 |
| Example 6 | 273.1 | 88.5 | 90.4 | 91.1 |
| Example 7 | 309.5 | 87.6 | 93.5 | 96.0 |
| Example 8 | 291.6 | 83.5 | 94.1 | 97.3 |
| Example 9 | 302.6 | 84.8 | 93.2 | 95.7 |
| Example 10 | 241.3 | 84.7 | 92.1 | 93.9 |
| Example 11 | 267.3 | 84.4 | 91.5 | 93.3 |
| Example 12 | 236.8 | 82.5 | 91.8 | 92.9 |
| Example 13 | 271.4 | 80.9 | 91.7 | 92.8 |
| Example 14 | 283.9 | 86.5 | 87.3 | 90.1 |
| Example 15 | 225.6 | 81.9 | 91.5 | 92.5 |
| Comparative Example 1 | 219.6 | 79.6 | 90.3 | 91.2 |
| Comparative Example 2 | 195.0 | 80.4 | 82.8 | 84.6 |

From comparison between the testing results of Examples 1 to 15 and Comparative Examples 1 and 2, it will be understood that values of (V_{C}/V_{DBP}+V_{D/G}) of the hard carbon negative electrode material in embodiments of this application are controlled within a range of 0.80 to 12.60, the coin-type battery made of the hard carbon negative electrode material exhibits overall superior electrochemical performance. In particular, the first desodiation specific capacity may maintain above 245 mAh/g, the initial Coulombic efficiency of the coin-type battery exceeds 80%, the discharge capacity retention at the 2C discharging rate is above 90%, and the charge capacity retention at the 2C charging rate is mostly above 90%. In general, the coin-type battery in embodiments of this application exhibits better electrochemical performance than batteries in the Comparative Examples prepared using hard carbon negative electrode materials with values of (V_{C}/V_{DBP}+V_{D/G}) outside of the range of 0.80 to 12.60. This indicates that controlling the hard carbon negative electrode material to satisfy 0.80≤V_{C}/V_{DBP}+V_{D/G}≤12.60 in this application may better balance between the sodium-storage capacity and the kinetic performance, thereby allowing the sodium-ion battery to achieve both high energy density and good rate performance.

Furthermore, from comparison between Example 14 and Examples 1 to 12, it will be understood that, when the value of (V_{C}/V_{DBP}+V_{D/G}) falls within the range of 0.80 to 12.60, if V_{D/G} falls within a range of 0.50 to 10.00, the sodium-ion battery is more likely to have good rate performance. From comparison between Example 13 and Examples 1 to 12, it will be understood that, when the value of (V_{C}/V_{DBP}+V_{D/G}) falls within the range of 0.80 to 12.60, if V_{DBP} falls within a range of 10.00 to 100.00, the sodium-ion battery is more likely to have high initial Coulombic efficiency. From comparison between Example 15 and Examples 1 to 12, it will be understood that, when the value of (V_{C}/V_{DBP}+V_{D/G}) falls within the range of 0.80 to 12.60, if V_{C} falls within a range of 20 to 26 and V_{D/G} falls within the range of 0.50 to 10.00, the sodium-ion battery is more likely to have high specific capacity and high initial coulombic efficiency.

The foregoing descriptions are example implementations of this application, and the descriptions are relatively specific and detailed, but will not be construed as a limitation on the patent scope of the present invention. It will be noted that a person of ordinary skill in the art may make some improvements and polishing without departing from the idea of the present invention and the improvements and polishing shall fall within the protection scope of the present invention.

## Claims

1. A hard carbon negative electrode material, wherein a 2θ value corresponding to a diffraction peak of a (002) crystal plane in an XRD pattern of the hard carbon negative electrode material is V_{C}°; an I_{D}/I_{G} value in a Raman spectrum of the hard carbon negative electrode material is V_{D/G}; and an oil absorption value of the hard carbon negative electrode material is V_{DBP} mL/100 g; and
the hard carbon negative electrode material satisfies: 0.8≤V_{C}/V_{DBP}+V_{D/G}≤12.6.

2. The hard carbon negative electrode material according to claim 1, wherein V_{C} is in a range of 20 to 26.

3. The hard carbon negative electrode material according to claim 1 or 2, wherein V_{D/G} is in a range of 0.5 to 10.0.

4. The hard carbon negative electrode material according to any one of claims 1 to 3, wherein V_{DBP} is in a range of 10 to 100.

5. The hard carbon negative electrode material according to any one of claims 1 to 4, wherein 1.0≤V_{C}/V_{DBP}+V_{D/G}≤10.0.

6. The hard carbon negative electrode material according to any one of claims 1 to 5, wherein 1.28≤V_{C}/V_{DBP}+V_{D/G}≤4.12.

7. The hard carbon negative electrode material according to any one of claims 1 to 6, wherein V_{C} is in a range of 22 to 25.

8. The hard carbon negative electrode material according to any one of claims 1 to 7, wherein V_{D/G} is in a range of 1.0 to 3.5.

9. The hard carbon negative electrode material according to any one of claims 1 to 8, wherein V_{DBP} is in a range of 40 to 80.

10. The hard carbon negative electrode material according to any one of claims 1 to 9, wherein the hard carbon negative electrode material has a D50 of 2 µm to 20 µm.

11. A negative electrode (20), wherein the negative electrode (20) comprises the hard carbon negative electrode material according to any one of claims 1 to 10.

12. A sodium-ion battery (10), wherein the sodium-ion battery (10) comprises the negative electrode (20) according to claim 11 and a positive electrode (30).

13. An apparatus (100) comprising the sodium-ion battery (10) according to claim 12, wherein the apparatus (100) is a power-consuming device or an energy storage system.
